# FASCICULE DE BREVET EUROPEEN

(11) **EP 3 035 715 B1**
(45) Date de publication et mention de la délivrance du brevet: **17.02.2021**
(21) Numéro de dépôt: 15197100.9
(22) Date de dépôt: 30.11.2015
(51) Int. Cl.: H04W 4/80, H04W 4/02, H04L 29/08, H04M 1/725, G09B 21/00, G06Q 20/32, G06K 7/00, G06K 7/10, G06K 19/00, G06K 19/07, G06K 19/077, G07F 7/08

(54) **PROCÉDÉ D'INDICATION DE PROXIMITÉ, DISPOSITIF, PROGRAMME ET SUPPORT D'ENREGISTREMENT CORRESPONDANTS**
VERFAHREN ZUR ANNÄHERUNGSANGABE UND ENTSPRECHENDE EINRICHTUNG, PROGRAMM, UND SPEICHER MEDIUM
METHOD OF INDICATING PROXIMITY AND CORRESPONDING DEVICE, PROGRAM, AND STORING MEDIA

(30) Priorité: 16.12.2014 FR 1462522
(43) Date de publication de la demande: 22.06.2016
(73) Titulaire: Ingenico Group, 75015 Paris (FR)
(72) Inventeur: MENARDAIS, Michaël, 33160 SAINT MEDARD EN JALLES (FR); MARSAUD, Thierry, 33400 TALENCE (FR)
(74) Mandataire: Vidon Brevets & Stratégie

(56) Documents cités:
- EP-A1- 0 533 542
- EP-A1- 0 565 469
- EP-A1- 0 691 625
- EP-A1- 2 814 231
- GB-A- 2 356 073
- US-A1- 2002 087 268
- US-A1- 2009 121 829
- US-A1- 2010 159 833
- US-A1- 2013 298 208
- US-A1- 2014 361 735

## Description

### 1. Domaine de l'invention

L'invention se rapporte au domaine des dispositifs de communication et plus particulièrement à la détection de proximité entre de tels dispositifs de communication, en vue de signaler cette proximité à un utilisateur de l'un des deux dispositifs.

### 2. Art Antérieur

On connaît des techniques de localisation d'objets, basées par exemple sur des calculs de triangulation à partir de plusieurs signaux reçus de plusieurs bornes émettrices. Ces techniques permettent par exemple d'échanger des données avec un dispositif localisé dans une zone donnée, comme par exemple un smartphone d'un utilisateur lorsqu'il entre dans l'enceinte d'un magasin.

On connaît également des techniques permettant à plusieurs dispositifs de communiquer entre eux, dès lors qu'ils sont suffisamment proches les uns des autres. C'est le cas par exemple des technologies Bluetooth, RFID, NFC ...

Ainsi, des techniques actuelles permettent le paiement électronique (ou la validation de coupons de réduction) sans contact ou encore l'accès sécurisé à un bâtiment (ou un transport en commun) sans contact. Le principe de ces techniques repose sur la présentation d'un équipement « client », par exemple une carte de paiement électronique, un smartphone, un badge d'accès ou une carte de transport en commun, auprès d'un équipement « cible » tel qu'un terminal de paiement électronique, une borne d'entrée à un bâtiment ou à un transport en commun, et la communication entre l'équipement client et l'équipement cible pour effectuer une transaction ou une autorisation d'accès. Des exemples d'étuis de cartes électroniques sont connus des demandes de brevet suivantes: EP0691625 A1, US2009/121829 A1, EP0565469 A1, EP0533542 A1.

Un inconvénient majeur de ces techniques réside dans la difficulté, pour un utilisateur malvoyant, à positionner son équipement client suffisamment près de l'équipement cible pour qu'une communication puisse être initiée, sans être guidé par une aide extérieure. En effet, dans certaines situations d'usage, une aide extérieure n'est pas recommandée pour des raisons de sécurité, comme par exemple pour le paiement électronique sans contact. Des exemples de procédés émettant des signaux sonores ou tactiles en fonction de la distance entre deux dispositifs électroniques sont connus des demandes de brevets suivantes: US2014/361735 A1, US2013/298208 A1, ainsi que EP2814231 A1 déposée le 13 juin 2013 et publiée le 17 décembre 2014.

### 3. Résumé de l'invention

L'invention est définie par la revendication indépendante 1 de procédé d'indication de proximité, la revendication indépendante 6 d'étui de carte électronique, la revendication indépendante 7 de programme d'ordinateur et la revendication indépendante 8 de support d'enregistrement informatique. L'invention propose une solution nouvelle qui ne présente pas l'ensemble de ces inconvénients de l'art antérieur, sous la forme d'un procédé d'indication de proximité, mis en œuvre dans un module d'indication de proximité rattaché à un premier dispositif de communication, dit dispositif détecteur, entre le dispositif détecteur et un deuxième dispositif de communication, dit dispositif à détecter, le dispositif détecteur correspondant à un étui de carte électronique et le procédé comprenant au moins une itération des étapes suivantes :
- réception d'au moins un signal émis par le dispositif à détecter ;
- détermination, à partir du signal reçu, d'au moins une indication de proximité entre le dispositif à détecter et le dispositif détecteur ;
- génération d'au moins un signal sonore et/ou vibratoire représentatif de l'indication de proximité déterminée ;
- émission du signal sonore et/ou vibratoire généré.

Ainsi, l'invention propose une solution nouvelle et inventive de l'indication de proximité entre deux dispositifs, basée d'une part sur la détermination d'une indication de proximité entre les deux dispositifs à partir d'un signal reçu, par le dispositif détecteur, en provenance du dispositif à détecter, et d'autre part sur la génération d'un signal « sensoriel » (sonore, vibratoire ou les deux) représentatif de cette proximité.

En effet, le procédé d'indication de proximité selon l'invention, implémenté dans un module d'indication de proximité rattaché à un dispositif détecteur (par exemple intégré dans ce dispositif ou comprenant ce dispositif), permet non seulement de déterminer la proximité entre deux dispositifs mais également d'émettre un signal sensoriel dépendant et représentatif de la proximité déterminée. Ainsi, le signal sensoriel ne se limite pas à un signal sensoriel « binaire » se déclenchant à partir d'une certaine information de proximité, mais il varie selon la valeur de proximité déterminée. Par exemple, l'intensité, la fréquence, ou encore la forme même du signal sensoriel généré est variable en fonction du degré de proximité entre les deux dispositifs.

De plus, le signal « sensoriel » généré et émis par le module d'indication de proximité, selon le procédé de l'invention, est prévu pour être « capté », ou ressenti, par un utilisateur malvoyant, et se distingue donc d'un signal visuel. Par exemple, lorsqu'un utilisateur malvoyant cherche à approcher un dispositif détecteur muni du module d'indication de proximité mettant en œuvre le procédé selon l'invention, d'un dispositif à détecter, sans voir ce dispositif à détecter, le module d'indication de proximité vibre (plus ou moins intensément en fonction de la proximité) ou sonne (plus ou moins fort, ou avec des sons différents, en fonction de la proximité) à l'approche du dispositif à détecter.

Une application particulièrement intéressante de l'invention réside dans l'assistance au paiement NFC pour un utilisateur malvoyant. Ainsi, selon un mode de réalisation de l'invention, le dispositif détecteur correspond à un équipement client, par exemple un smartphone, ou un étui de carte électronique (par exemple un porte-carte de paiement électronique ou un porte-carte d'accès), mettant en œuvre le procédé selon l'invention et comprenant en outre des moyens de communication de type NFC pour effectuer des paiements NFC avec un terminal de paiement électronique (constituant le dispositif à détecter). De ce fait, un utilisateur malvoyant porteur d'un smartphone souhaitant effectuer un paiement NFC avec un terminal de paiement électronique, peut bénéficier d'indication sur la proximité entre son smartphone et le terminal de paiement électronique via un signal sonore et/ou vibratoire émis par ce smartphone en fonction de la distance avec le terminal de paiement électronique. Par exemple, son smartphone vibre avec une intensité grandissante plus il approche du terminal de paiement électronique, permettant ainsi à l'utilisateur malvoyant de savoir qu'il dirige son smartphone dans la bonne direction.

Une variante de ce mode de réalisation consiste à équiper un porte-carte, ou étui, pour une carte de paiement électronique d'un tel module d'indication de proximité selon l'invention, de façon à le rendre « intelligent », et à pouvoir assister un utilisateur malvoyant dans son approche de sa carte de paiement électronique du terminal de paiement électronique lors d'un paiement NFC.

L'invention peut également s'appliquer à la validation de coupons de réduction ou de fidélité, sur le même principe qu'un paiement NFC.

Une autre application de l'invention consiste à assister un utilisateur malvoyant dans l'accès à un bâtiment ou un transport en commun, qui se ferait par communication en champ proche entre son smartphone, ou une carte d'accès portée dans un étui intelligent tel que décrit ci-dessus, et une borne à l'entrée d'un bâtiment ou sur un quai de métro ou de tramway ou encore à l'entrée d'un bus.

Encore une autre application envisageable, non dédiée aux utilisateurs malvoyants, concerne l'accès sécurisé à une pièce d'un bâtiment, consistant uniquement à détecter la bonne carte d'accès, cet accès n'étant par ailleurs matérialisé d'aucune manière afin de préserver sa sécurité. Ainsi, un bâtiment comportant plusieurs « salles blanches » dédiées à différents opérateurs ou groupes de personnes, peut sécuriser l'accès à chacune de ces salles uniquement par la détection de la carte d'accès autorisée au niveau de chaque porte de salle, sans qu'aucune indication visuelle ne permette de savoir à quel opérateur chaque salle est dédiée.

Par exemple, lorsque le signal reçu correspond à un signal radio, l'étape de détermination d'une indication de proximité comprend une étape de calcul d'une distance entre les dispositifs tenant compte d'une mesure d'une caractéristique du signal radio reçu et d'au moins une information de correspondance entre une valeur de la caractéristique du signal et une distance.

Ainsi, ce mode de réalisation permet en particulier d'utiliser des signaux émis par le dispositif à détecter, non spécifiquement dédiés à la présente invention (par exemple des signaux Bluetooth émis par un terminal de communication en vue d'un appairage avec un autre terminal de communication), en en mesurant une caractéristique afin de déterminer une distance entre les deux dispositifs.

Par exemple, l'intensité, ou la puissance, d'un signal reçu en provenance du dispositif à détecter, est mesurée et permet de déterminer, par application d'une table de correspondance entre une puissance de signal et une distance, une indication de la distance entre les deux dispositifs. Cette table de correspondance indique par exemple qu'à un mètre de distance entre les deux dispositifs, le niveau du signal doit correspondre à une première valeur, alors qu'à cinquante centimètres de distance entre les deux dispositifs, le niveau du signal doit correspondre à une deuxième valeur et ainsi de suite. De cette manière, en fonction du niveau de signal mesuré, il est possible d'évaluer la distance entre les deux dispositifs.

Une indication de proximité peut donc correspondre à une distance évaluée entre les deux dispositifs, ou à un intervalle comprenant une distance minimum évaluée et une distance maximum évaluée entre les deux dispositifs.

Selon un aspect particulier, le signal radio correspond à un signal de type Bluetooth à faible énergie et la caractéristique mesurée correspond au niveau du signal reçu.

Ainsi, ce mode de réalisation permet d'utiliser un signal radio de type Bluetooth à faible énergie, encore appelé Bluetooth Low Energy, ou Bluetooth Smart, émis par le dispositif à détecter et d'en mesurer le niveau, de façon à déterminer ensuite la distance entre les deux dispositifs.

En effet, la plupart des terminaux de paiement électronique possèdent déjà (ou posséderont) cette fonctionnalité Bluetooth Low Energy et émettent par conséquence des signaux de ce type, dont la puissance peut être mesurée pour déterminer la proximité du dispositif émetteur par rapport au dispositif détecteur.

De même, la plupart des terminaux de communication mobile de type smartphone possèdent également cette fonctionnalité Bluetooth Low Energy.

Selon une caractéristique particulière, l'tape de génération du signal sonore et/ou vibratoire comprend une étape de paramétrage d'au moins une caractéristique du signal sonore et/ou vibratoire généré en fonction de l'indication de proximité déterminée.

Ainsi, ce mode de réalisation permet de faire varier une caractéristique du signal sonore et/ou vibratoire émis par le module d'indication de proximité en fonction de la valeur même de l'indication de proximité déterminée.

Par exemple, s'il s'agit d'un signal sonore, son niveau peut augmenter avec la diminution de la distance entre les deux dispositifs, ou des motifs sonores différents peuvent être utilisés en fonction de la distance (par exemple du plus grave au plus aigu avec la diminution de la distance).

S'il s'agit d'un signal vibratoire, le niveau et/ou la fréquence des vibrations peut augmenter avec la diminution de la distance entre les deux dispositifs.

Enfin, s'il s'agit d'un signal combinant un son et des vibrations, toutes les combinaisons peuvent être envisagées (modification uniquement du niveau du son avec vibrations constantes, modification uniquement des vibrations avec signal sonore constant, modification des deux signaux combinés).

Selon un mode de réalisation particulier, le nombre d'itérations des étapes de réception, détermination, génération et émission dépend d'au moins un critère prédéterminé représentatif de l'indication de proximité déterminée à l'itération précédente.

Ainsi, ce mode de réalisation permet de limiter le nombre d'itérations des différentes étapes du procédé selon l'invention, en fonction de l'indication de proximité déterminée à l'itération précédente.

En effet, lorsque la distance évaluée entre les deux dispositifs est considérée comme suffisante pour la réalisation de l'application souhaitée (par exemple pour que les deux dispositifs puissent communiquer selon des critères prédéfinis), il convient de faire comprendre à l'utilisateur que les deux dispositifs sont correctement positionnés pour la mise en œuvre de l'application souhaitée.

Par exemple, lorsque la distance évaluée à l'itération précédente est inférieure à un certain seuil prédéterminé, il convient soit de continuer à émettre le même signal sonore et/ou vibratoire, soit d'arrêter l'émission de ce signal, de façon à ce que l'utilisateur sache qu'il peut arrêter le déplacement de son dispositif.

L'invention concerne également un module d'indication de proximité, rattaché à un premier dispositif de communication, dit dispositif détecteur, entre le dispositif détecteur et un deuxième dispositif de communication, dit dispositif à détecter, le dispositif détecteur correspondant à un étui de carte électronique, et le module d'indication de proximité comprenant les moyens suivants :
- des moyens de réception d'au moins un signal émis par e dispositif à détecter ;
- des moyens de détermination, à partir du signal reçu, d'au moins une indication de proximité entre le dispositif à détecter et le dispositif détecteur ;
- des moyens de génération d'au moins un signal sonore et/ou vibratoire représentatif de l'indication de proximité déterminée ;
- des moyens d'émission du signal sonore et/ou vibratoire généré.

Par exemple, un tel module est intégré à un terminal de communication tel qu'un smartphone ou une tablette, ou bien à un étui pour carte de paiement électronique.

L'invention concerne également un programme d'ordinateur téléchargeable depuis un réseau de communication et/ou stocké sur un support lisible par ordinateur et/ou exécutable par un microprocesseur pour la mise en œuvre d'un procédé tel que décrit précédemment, lorsque ce programme est exécuté par un processeur.

Enfin, l'invention concerne un support d'enregistrement lisible par un ordinateur sur lequel est enregistré un programme d'ordinateur comprenant un jeu d'instructions exécutables par un ordinateur ou un processeur pour mettre en œuvre d'un procédé tel que décrit précédemment, lorsque ce programme est exécuté par un processeur.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente les principales étapes du procédé d'indication de proximité, selon un mode de réalisation particulier de l'invention ;
- la figure 2 présente un diagramme de séquences, selon un mode de réalisation particulier de l'invention ;
- les figures 3a et 3b présentent deux exemples de système pouvant mettre en œuvre le procédé d'indication de proximité selon l'invention, selon deux modes de réalisation particuliers ;
- les figures 4 et 5 illustrent deux exemples d'architecture simplifiée d'un module d'indication de proximité selon un mode de réalisation particulier de l'invention.

### 5. Description

### 5.1. Principe général

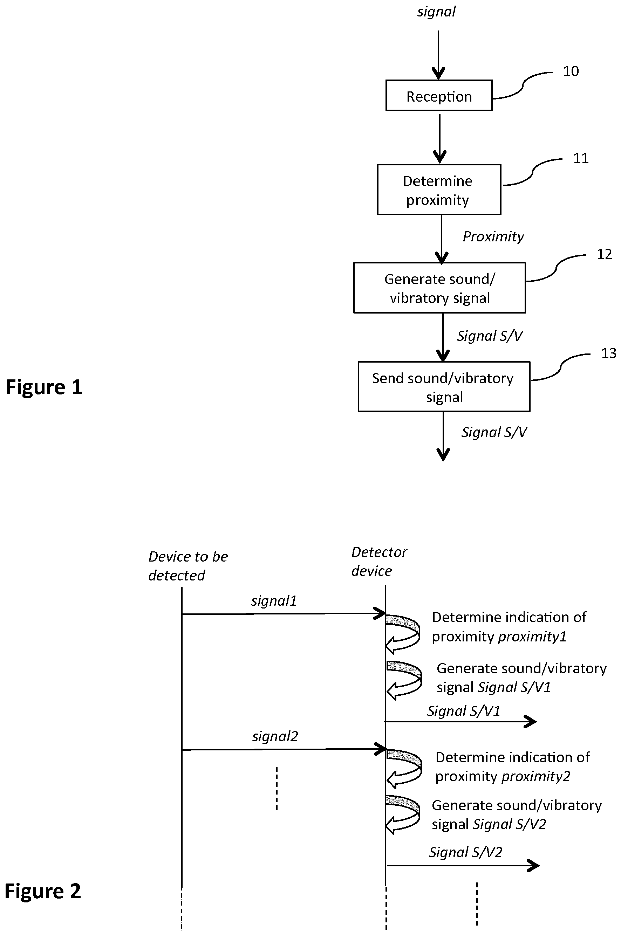

Le principe général de l'invention, décrit en relation avec les figures 1 et 2, consiste à déterminer une indication de proximité entre deux dispositifs, à partir d'un signal reçu par un premier dispositif, en provenance d'un deuxième dispositif, et à émettre, à destination de l'utilisateur du premier dispositif, un signal sonore et/ou vibratoire représentatif de cette proximité.

Pour ce faire, l'invention est mise en œuvre dans un module spécifique, appelé module d'indication de proximité par la suite, rattaché au premier dispositif, c'est-à-dire par exemple intégré dans ce premier dispositif ou portant ce premier dispositif.

Par ailleurs, le signal sonore et/ou vibratoire émis étant représentatif de la proximité, il dépend de l'indication de proximité, par exemple en variant certaines de ces caractéristiques propres.

Par exemple, un utilisateur malvoyant cherchant à approcher un dispositif en sa possession d'un autre dispositif distant, pour une application particulière nécessitant une communication entre les deux dispositifs, est informé de la distante restante entre son dispositif et le deuxième dispositif par un signal, sonore et/ou vibratoire, émis par son propre dispositif.

Comme illustré en figure 1, une première étape de réception 10 est donc mise en œuvre, au sein du module d'indication de proximité, d'un signal reçu en provenance d'un dispositif distant, noté par la suite dispositif à détecter. Ce signal émis par le dispositif à détecter n'est pas spécifique à l'invention, mais peut être émis dans le cadre de toute autre application.

Par exemple, un tel signal correspond à un signal de type Bluetooth faible énergie (ou *Bluetooth Low Energy* en anglais) pouvant être reçu jusqu'à cinquante mètres. Il est en effet de plus en plus fréquent qu'un terminal de communication présente de tels moyens de communication Bluetooth, notamment pour des applications de localisation en intérieur. Le principe de ce type d'application de localisation, ou micro-localisation, repose sur l'implantation d'une pluralité de balises émettrices de signaux Bluetooth Low Energy, pouvant être reçus par un smartphone (ou une tablette) équipé d'une application permettant d'écouter ces balises. Lorsque le smartphone capte le signal Bluetooth émis par la balise, il reconnaît alors de quelle balise provient le signal et peut estimer la distance à laquelle se situe cette balise, en analysant la puissance du signal par exemple.

Cette fonctionnalité peut donc être utilisée dans le procédé de l'invention, selon ce mode de réalisation, pour déterminer la proximité entre le premier dispositif détecteur (par exemple un smartphone apte à écouter un signal Bluetooth Low Energy) et le deuxième dispositif à détecter (par exemple un terminal de paiement électronique émettant de tels signaux Bluetooth Low Energy).

Ainsi, à partir de ce signal reçu lors de l'étape 10, une étape 11 de détermination d'une indication de proximité est mise en œuvre,au sein du module d'indication de proximité, afin de déterminer à quelle distance, ou dans quelle plage de distances, les deux dispositifs se situent l'un de l'autre.

Par exemple, le niveau du signal reçu suffit pour déterminer la distance, ou un ordre de grandeur de cette distance, entre les deux dispositifs. Dans ce cas, l'étape de détermination utilise également une table de correspondance permettant d'évaluer une distance à partir d'un niveau de signal. Pour ce faire, une mesure de puissance du signal reçu du type « *Received Signal Strength Indication* » en anglais ou RSSI peut être mise en œuvre.

Selon un autre exemple, le signal reçu porte une information de localisation du dispositif à détecter, et la distance entre les deux dispositifs peut être calculée par le module d'indication de proximité, connaissant la localisation du dispositif détecteur. Ce type de calcul est bien connu et n'est pas détaillé ici.

Une fois l'indication de proximité déterminée lors de l'étape 11, une étape 12 de génération d'un signal sonore et/ou vibratoire (noté *Signal S*/*V* par la suite), représentatif de l'indication de proximité, est mise en œuvre. Ainsi, une ou plusieurs caractéristiques du signal *Signal S*/*V* est/sont paramétrable(s) pour « refléter » le degré de proximité déterminée à l'attention de l'utilisateur, lors d'une étape 13 d'émission de ce signal *Signal S*/*V* généré. Cette étape de génération d'un signal *S*/*V* est décrite plus en détails ci-dessous, en relation avec différents modes de réalisation de l'invention.

La figure 2 illustre quant à elle le déroulement des étapes décrites ci-dessus, au fur et à mesure du déplacement du dispositif détecteur vers le dispositif à détecter.

En effet, pour que le signal sonore et/ou vibratoire *Signal S*/*V* puisse refléter le degré de proximité entre les deux dispositifs, lorsque l'un des dispositifs est mobile, alors une nouvelle indication de proximité doit être déterminée afin de générer et émettre un nouveau signal *Signal S*/*V* représentatif de la distance courante entre les deux dispositifs.

Pour ce faire, les étapes 10 à 13 décrites ci-dessus sont réitérées, par exemple de manière périodique, ou à réception d'un nouveau signal en provenance du dispositif à détecter.

Ainsi, comme illustré en figure 2, un premier signal *Signal S*/*V1* est généré et émis, suite à la réception d'un signal *signal1* en provenance du dispositif à détecter et à la détermination d'une première indication de proximité *proximité1.* Ensuite, à réception d'un signal *signal2* en provenance du dispositif à détecter, une deuxième indication de proximité *proximité2* est déterminée, de façon à générer et émettre un deuxième signal *Signal S*/*V2.*

Quelle que soit la mise en œuvre des itérations (périodique ou à réception d'un nouveau signal), le nombre d'itérations des étapes du procédé peut être limité par une distance minimale au-delà de laquelle il n'est plus nécessaire de modifier le signal sonore et/ou vibratoire émis ou même de l'émettre.

En effet, on considère que lorsque les deux dispositifs sont suffisamment proches pour la mise en œuvre de l'application souhaitée (par exemple un paiement sans contact), il n'est plus nécessaire d'indiquer à l'utilisateur le degré de proximité. Un arrêt de l'émission du signal sonore et/ou vibratoire peut même être préférable pour que l'utilisateur sache qu'il peut arrêter le déplacement de son dispositif détecteur et le laisse positionné au même endroit, pour la réalisation de l'application souhaitée.

Il est à noter que l'invention, selon ses différents modes de réalisation, est basée sur la réception de signaux émis par un dispositif pouvant mettre en œuvre tout type de protocoles radio, WIFI ou non standardisés, répondant à la même problématique de détermination d'une proximité à partir d'un signal reçu.

### 5.2. Description d'un premier mode de réalisation

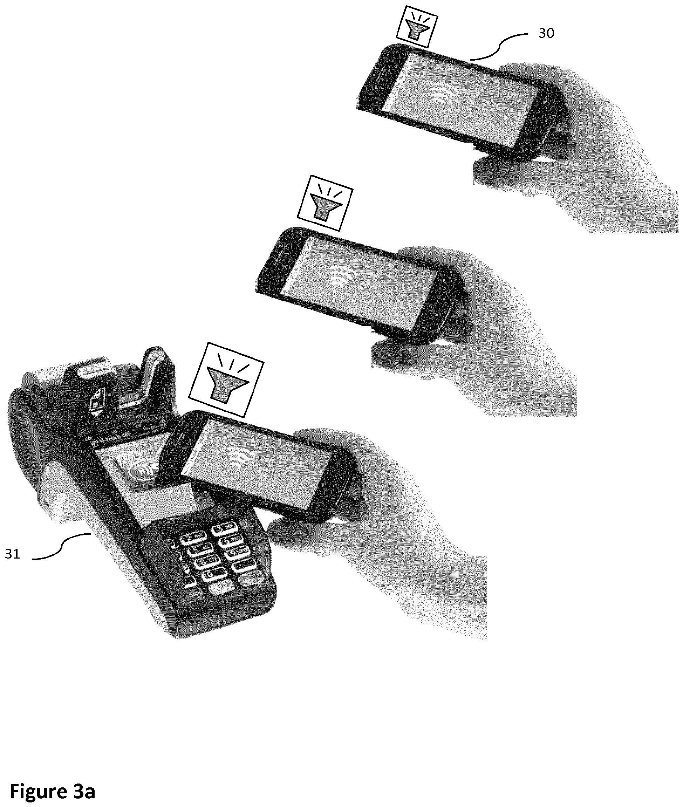

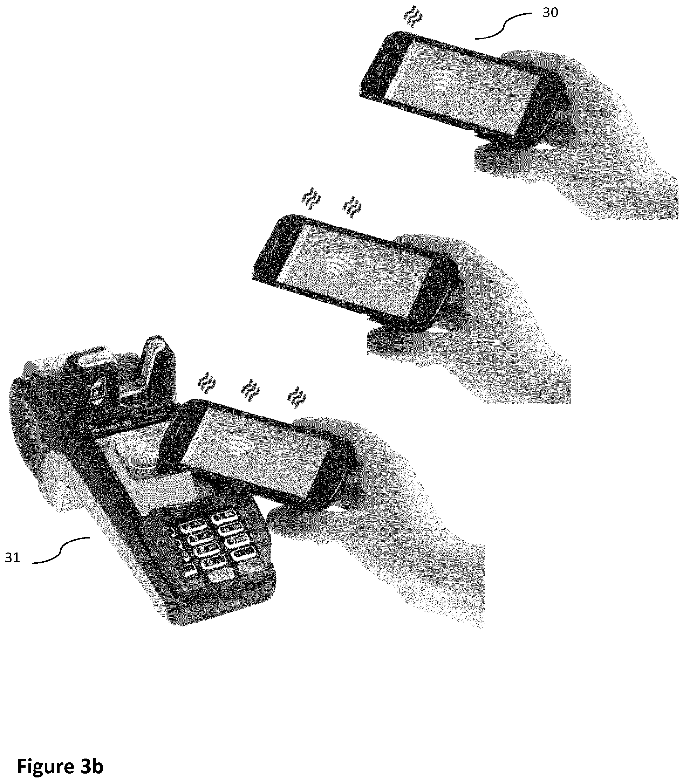

On décrit maintenant, en relation avec les figures 3a et 3b, deux variantes d'un premier mode de réalisation particulier de l'invention, dans lequel le dispositif détecteur 30 correspond à un smartphone d'un client, et le dispositif à détecter 31 correspond à un terminal de paiement électronique, les deux dispositifs mettant en œuvre des moyens de communication en champ proche de type NFC (pour « *Near Field Communication* » en anglais) pour la réalisation d'une application de paiement sans contact.

Ce type de paiement sans contact utilisant une technologie NFC est mis en œuvre de plus en plus fréquemment, car il permet à l'utilisateur de ne pas avoir à saisir de code secret pour valider une transaction, engendrant ainsi un gain de temps non négligeable.

Par ailleurs, cette technique de paiement sans contact est basée, lorsqu'elle met en œuvre un terminal mobile d'un utilisateur (par exemple un smartphone), sur un mode dit « émulation de carte », ou « passif », dans ce terminal mobile de l'utilisateur, qui se comporte alors comme une carte à puce sans-contact. Dans le cas où le terminal mobile est un téléphone mobile compatible, la carte SIM de l'opérateur peut être utilisée comme élément de sécurité en stockant des informations chiffrées.

Les usages de cette technique NFC sont multiples :
- paiement sur un terminal de paiement électronique sans contact ;
- paiement d'un parking à une borne acceptant le paiement sans contact ;
- achat et validation sans contact d'un titre de transport ou d'un billet d'entrée à un spectacle ;
- gestion de coupons de réduction dans un magasin, gestion de points de fidélité chez les commerçants (« couponing ») ;
- accès et démarrage d'un véhicule en libre-partage ;
- contrôle d'accès à des locaux en accès réservé (salle de réunion, entreprise, salle de cours, etc.) ;
- accès aux fonctionnalités domotique d'un bâtiment.

La portée de transmission par NFC est très courte, entre cinq et vingt centimètres entre les objets impliqués, c'est-à-dire, dans l'exemple illustré en figures 3a et 3b, entre le terminal mobile 30 et le terminal de paiement électronique 31.

Les figures 3a et 3b présentent donc chacune trois étapes successives d'approche du terminal mobile 30 vers le terminal de paiement électronique 31.

En effet, il est nécessaire d'approcher le terminal mobile 30 relativement près du terminal de paiement électronique 31 pour que l'application de paiement puisse être mise en œuvre,ce qui induit des difficultés d'utilisation pour un utilisateur malvoyant.

En effet, un utilisateur malvoyant doit actuellement être assisté par quelqu'un pour approcher de manière suffisante et précise son terminal mobile du terminal de paiement électronique, de façon à pouvoir déclencher l'application de paiement. Or, une telle application de paiement nécessite normalement toutes les précautions de sécurité, afin d'éviter qu'une personne malveillante ne profite de l'invalidité d'un utilisateur malvoyant. Ces exigences de sécurité sont donc incompatibles avec l'assistance d'un tiers au paiement impliquant un utilisateur malvoyant.

Le procédé selon ce mode de réalisation de l'invention permet ainsi à un utilisateur malvoyant de s'affranchir d'une telle aide humaine, en étant informé en temps réel, au fur et à mesure du déplacement de son terminal mobile vers le terminal de paiement électronique, de la distance restante entre son terminal mobile et le terminal de paiement électronique.

Pour ce faire, le terminal mobile 30 de l'utilisateur est muni, via un module d'indication de proximité selon l'invention par exemple intégré au terminal mobile 30, de moyens de réception de signaux, émis par le terminal de paiement électronique 31. Par exemple, ces signaux émis sont de type Bluetooth Low Energy.

De plus, le module d'indication de proximité présente des moyens de détermination de la proximité entre les deux dispositifs, et des moyens de génération d'un signal en fonction de cette proximité.

Selon la première variante illustrée en figure 3a, le signal généré et émis par le terminal mobile 30, via le module d'indication de proximité, est un signal sonore, illustré par un icône de type « haut-parleur » sur la figure 3a.

Comme déjà décrit ci-dessus, le signal sonore généré et émis est représentatif de l'indication de proximité déterminée. Par exemple, le niveau du signal sonore augmente avec la proximité, c'est-à-dire que le signal est de plus en plus fort au fur et à mesure du rapprochement du terminal mobile 30 du terminal de paiement électronique 31. Ceci est en particulier illustré sur la figure 3a par une taille grandissante de l'icône de haut-parleur.

Ainsi, pour un utilisateur malvoyant approchant son terminal mobile du terminal de paiement électronique, l'augmentation du signal sonore émis par son terminal mobile lui fournit une indication de proximité entre son terminal mobile et le terminal de paiement électronique « cible », lui permettant ainsi d'être assuré qu'il peut continuer à diriger son terminal mobile vers le terminal de paiement électronique dans la même direction, tout en sachant qu'il n'est pas encore suffisamment proche de ce terminal de paiement électronique pour la mise en œuvre de l'application de paiement sans contact.

En effet, comme déjà décrit ci-dessus, le procédé selon l'invention permet, selon cette première variante du premier mode de réalisation, non seulement de modifier le niveau du signal sonore en fonction de l'indication de proximité, au fur et à mesure des itérations du procédé, mais également de stopper l'émission du signal sonore selon l'indication de proximité déterminée à l'itération précédente. Ainsi, il est prévu de ne plus générer de signal sonore lorsqu'une distance suffisante pour la mise en œuvre du paiement sans contact NFC est atteinte, de façon à ce que l'utilisateur immobilise son terminal dans la position où il se trouve.

Ainsi, cette première variante du premier mode de réalisation de l'invention permet à un utilisateur de diriger son terminal vers le terminal de paiement électronique en écoutant le signal sonore émis par son propre terminal mobile et d'être assuré que son terminal mobile est bien positionné lorsque ce dernier ne génère plus de signal sonore.

Au contraire, l'utilisateur peut modifier la direction de son terminal mobile, si le niveau de signal sonore émis par ce dernier diminue, lui indiquant ainsi que la distance entre son terminal mobile et le terminal de paiement électronique cible augmente.

Il est également envisageable que le son même du signal sonore généré et émis soit différent en fonction de la distance déterminée, par exemple en prévoyant un son de plus en plus aigu, ou de plus en plus grave.

La deuxième variante illustrée en figure 3b se distingue de la première variante uniquement par la forme du signal généré et émis par le dispositif détecteur, en l'occurrence le terminal mobile 30 de l'utilisateur. Ainsi, selon cette deuxième variante, le signal est vibratoire et les vibrations augmentent, par exemple en intensité et/ou en fréquence, au fur et à mesure de l'approche du terminal mobile 30 du terminal de paiement électronique 31. Ceci est représenté sur la figure 3a par l'icône de type « vibrations » reproduit deux ou trois fois, plus le terminal mobile 30 s'approche du terminal de paiement électronique 31.

Ainsi, l'utilisateur portant le terminal mobile 30 ressent des vibrations de plus en plus fortes, ou de plus en plus rapides/fréquentes s'il dirige bien son terminal mobile 30 vers le terminal de paiement électronique 31. Au contrainte, s'il ne dirige pas son terminal mobile dans la bonne direction, les vibrations diminuent (en intensité et/ou en fréquence), voire s'arrêtent, indiquant ainsi à l'utilisateur qu'il n'approche pas son terminal mobile 30 du terminal de paiement électronique 31.

Comme pour la première variante, lorsqu'une distance suffisante, prédéterminée, est atteinte entre le terminal mobile 30 et le terminal de paiement électronique 31, pour la mise en œuvre d'un paiement sans contact NFC, le signal vibratoire n'est plus émis, et l'utilisateur sait qu'il peut maintenir la position de son terminal mobile 30 jusqu'à la fin du paiement.

Le choix du type de signal, sonore et/ou vibratoire, peut dépendre de plusieurs critères, comme par exemple le type de dispositif intégrant le module d'indication de proximité selon l'invention, ou des préférences utilisateurs, ou encore un critère de sécurité lié à l'application « cible » (un paiement sans contact par exemple).

Ainsi, si le module d'indication de proximité est intégré dans un dispositif n'offrant pas la possibilité de générer et émettre un signal vibratoire, c'est un signal sonore qui est émis, et inversement.

Si le dispositif intégrant le module d'indication de proximité selon l'invention permet la génération des deux types de signaux (sonore ou vibratoire), le choix peut être effectué en fonction de préférences de l'utilisateur du dispositif, qui peut être plus sensible à l'un ou l'autre des signaux par exemple.

Enfin, certaines contraintes de sécurité peuvent entraîner le choix de l'un ou l'autre type de signal. Par exemple, lorsque l'invention est mise en œuvre dans le cadre d'un paiement sans contact, il est préférable que le signal émis soit plus discret qu'un signal sonore, tout en étant aisément reconnaissable par l'utilisateur. Dans ce cas, un signal vibratoire répond à la fois aux exigences de sécurité et d'ergonomie pour l'utilisateur.

Par ailleurs, comme déjà indiqué précédemment, les deux types de signaux peuvent être émis simultanément, à savoir un signal sonore et un signal vibratoire, pour une meilleure efficacité.

### 5.3. Description d'un deuxième mode de réalisation

Ce deuxième mode de réalisation, non illustré, prévoit que le module d'indication de proximité soit intégré à un étui, ou un porte-carte, permettant de porter une carte de paiement électronique pour la mise en œuvre d'un paiement sans contact de type NFC, comme décrit en relation avec le premier mode de réalisation.

Ainsi, selon ce deuxième mode de réalisation, c'est l'étui de carte bancaire portant le dispositif de communication de l'utilisateur, à savoir sa carte de paiement sans contact, qui met en œuvre l'invention, c'est-à-dire la détection d'un signal en provenance d'un dispositif à détecter (en l'occurrence ici un terminal de paiement électronique), la détermination d'une indication de proximité entre l'étui et le terminal de paiement électronique, puis la génération et l'émission d'un signal sonore et/ou vibratoire pour indiquer au porteur de l'étui si celui-ci approche ou non du terminal de paiement électronique.

Ce deuxième mode de réalisation offre donc les mêmes avantages que ceux décrits en relation avec le premier mode de réalisation, sans nécessité de modification du dispositif de paiement, à savoir la carte de paiement de l'utilisateur. En effet, c'est l'étui/porte-carte qui intègre le module d'indication de proximité selon l'invention, et permet la mise en œuvre de l'invention.

Ce deuxième mode de réalisation concerne également tout type d'applications nécessitant l'approche d'une carte électronique d'une cible, comme une carte d'accès à un bâtiment ou une salle d'un bâtiment, une carte de transport ... en permettant la mise en œuvre de l'invention via un étui pouvant porter la carte électronique, sans modification de celle-ci, et intégrant le module d'indication de proximité selon l'invention.

### 5.4. Description d'un troisième mode de réalisation

Dans les deux premiers modes de réalisation décrits ci-dessus, le module d'indication de proximité est intégré à un équipement client (un terminal mobile ou un étui de carte de paiement électronique), en vue de son interaction avec un équipement cible (un terminal de paiement électronique).

Dans ce troisième mode de réalisation, non illustré, le module d'indication de proximité est intégré à un équipement cible, par exemple un terminal de paiement électronique, en vue de son interaction avec un équipement client.

Par exemple, dans le cadre d'une application de paiement sans contact de type NFC, c'est le terminal de paiement électronique qui met en œuvre l'invention, de façon à faciliter l'approche d'un terminal mobile d'un utilisateur malvoyant.

Ainsi, c'est le terminal de paiement électronique qui détecte les signaux émis par le terminal mobile de l'utilisateur (par exemple un smartphone équipé de la technologie Bluetooth Low energy), pour déterminer une indication de proximité entre lui-même et le terminal mobile de l'utilisateur. A partir de cette indication de proximité, c'est également le terminal de paiement électronique qui génère et émet un signal représentatif de cette proximité.

Dans ce troisième mode de réalisation, on comprend qu'un signal sonore est plus adapté qu'un signal vibratoire, car c'est le terminal de paiement électronique qui l'émet, et non plus le terminal mobile de l'utilisateur, comme dans les premier et deuxième modes de réalisation.

De plus, il est possible, selon une variante de ce troisième mode de réalisation, que le procédé d'indication de proximité selon l'invention, soit activable et désactivable, par exemple par le commerçant en possession du terminal de paiement électronique. Ainsi, lorsqu'un utilisateur malvoyant requiert la mise en œuvre du service d'indiction de proximité, le commerçant active le module d'indication de proximité intégré au terminal de paiement électronique, afin d'assister l'utilisateur dans son paiement sans contact.

### 5.5. Architecture simplifiée d'un module d'indication de proximité

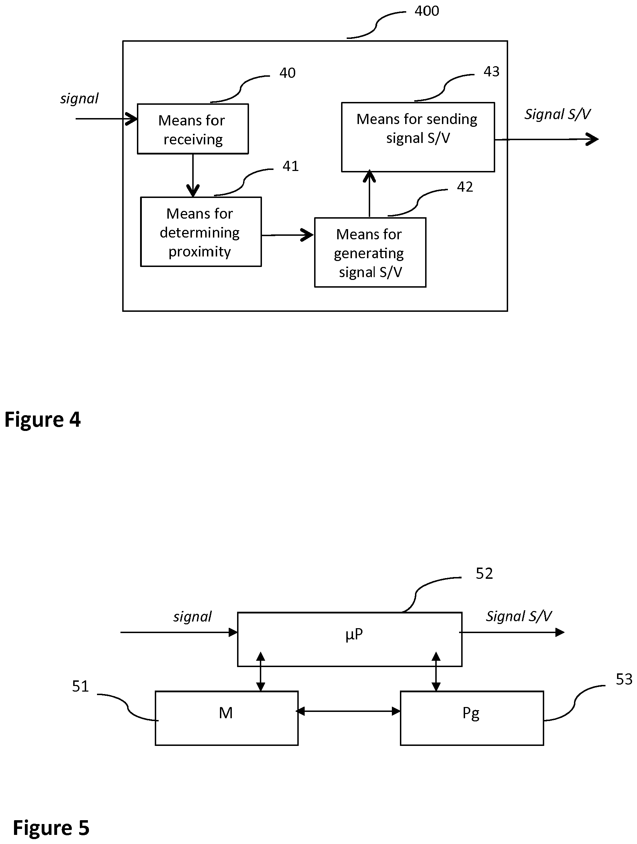

On décrit, en relation avec les figures 4 et 5, un exemple de module d'indication de proximité, comprenant des moyens d'exécution du procédé décrit préalablement.

Ainsi, comme illustré en figure 4, un tel module 400, intégré par exemple à un smartphone ou un étui de carte électronique, comprend les moyens suivants (par exemple sous la forme d'un ou plusieurs sous-modules) :
- des moyens de réception 40 d'au moins un signal émis par le dispositif à détecter ;
- des moyens de détermination 41, à partir du signal reçu, d'au moins une indication de proximité entre le dispositif à détecter et le dispositif détecteur ;
- des moyens de génération 42 d'au moins un signal sonore et/ou vibratoire représentatif de l'indication de proximité déterminée ;
- des moyens d'émission 43 du signal sonore et/ou vibratoire généré.

On décrit maintenant ce module 400 en relation avec la figure 5.

Par exemple, le module comprend une mémoire 51 constituée d'une mémoire tampon, une unité de traitement 52, équipée par exemple d'un microprocesseur, et pilotée par le programme d'ordinateur 53, mettant en œuvre un procédé d'indication de proximité selon les différents modes de réalisation décrit précédemment.

À l'initialisation, les instructions de code du programme d'ordinateur 53 sont par exemple chargées dans une mémoire avant d'être exécutées par le processeur de l'unité de traitement 52. L'unité de traitement 52 reçoit en entrée par exemple un signal émis par un dispositif à détecter, par exemple un terminal de paiement électronique. Le microprocesseur de l'unité de traitement 52 met en œuvre les étapes du procédé d'indication de proximité, selon les instructions du programme d'ordinateur 53, pour générer et émettre un signal sonore et/ou vibratoire noté *Signal S*/*V.*

## Revendications

1. Procédé d'indication de proximité, mis en œuvre dans un module d'indication de proximité rattaché à un premier dispositif de communication, dit dispositif détecteur, entre ledit dispositif détecteur et un deuxième dispositif de communication, dit dispositif à détecter, ledit dispositif détecteur étant compris dans un étui de carte électronique et ledit procédé comprenant au moins une itération des étapes suivantes :
• réception (10) d'au moins un signal émis par ledit dispositif à détecter ;
• détermination (11), à partir dudit signal reçu, d'au moins une indication de proximité entre ledit dispositif à détecter et ledit dispositif détecteur ;
• génération (12) d'au moins un signal vibratoire représentatif de ladite indication de proximité déterminée ;
• émission (13) dudit signal vibratoire généré.

2. Procédé d'indication de proximité selon la revendication 1, tel que, ledit signal reçu correspondant à un signal radio, ladite étape de détermination d'une indication de proximité comprend une étape de calcul d'une distance entre lesdits dispositifs tenant compte d'une mesure d'une caractéristique dudit signal radio reçu et d'au moins une information de correspondance entre une valeur de ladite caractéristique dudit signal et une distance.

3. Procédé d'indication de proximité selon la revendication 2, tel que ledit signal radio correspond à un signal de type Bluetooth à faible énergie et en ce que ladite caractéristique mesurée correspond au niveau dudit signal reçu.

4. Procédé d'indication de proximité selon la revendication 1, que ladite étape de génération dudit signal vibratoire comprend une étape de paramétrage d'au moins une caractéristique dudit signal vibratoire généré en fonction de ladite indication de proximité déterminée.

5. Procédé d'indication de proximité selon la revendication 1, tel que le nombre d'itérations des étapes de réception, détermination, génération et émission dépend d'au moins un critère prédéterminé représentatif de ladite indication de proximité déterminée à l'itération précédente.

6. Étui de carte électronique comprenant un premier dispositif de communication, dit dispositif détecteur, et comprenant un module d'indication de proximité, entre ledit dispositif détecteur et un deuxième dispositif de communication, dit dispositif à détecter, ledit module d'indication de proximité comprenant es moyens suivants :
• des moyens de réception (40) d'au moins un signal émis par ledit dispositif à détecter ;
• des moyens de détermination (41), à partir dudit signal reçu, d'au moins une indication de proximité entre ledit dispositif à détecter et ledit dispositif détecteur ;
• des moyens de génération (42) d'au moins un signal vibratoire représentatif de ladite indication de proximité déterminée ;
• des moyens d'émission (43) dudit signal vibratoire généré.

7. Programme d'ordinateur téléchargeable depuis un réseau de communication et/ou stocké sur un support lisible par ordinateur et/ou exécutable par un microprocesseur pour la mise en œuvre d'un procédé selon l'une quelconque des revendications 1 à 5, lorsque ce programme est exécuté par un processeur.

8. Support d'enregistrement lisible par un ordinateur sur lequel est enregistré un programme d'ordinateur comprenant un jeu d'instructions exécutables par un ordinateur ou un processeur pour mettre en œuvre d'un procédé selon l'une quelconque des revendications 1 à 5, lorsque ce programme est exécuté par un processeur.

## Patentansprüche

1. Verfahren zum Näherungsanzeigen, das in einem Näherungsanzeige-Modul, das an einer ersten Kommunikationsvorrichtung, die Erfassungsvorrichtung genannt wird, angebracht ist, zwischen der Erfassungsvorrichtung und einer zweiten Kommunikationsvorrichtung, die zu erfassende Vorrichtung genannt wird, die in einer EC-Kartenhülle enthalten ist, umgesetzt wird und wobei das Verfahren mindestens eine Iteration der folgenden Schritte aufweist:
• Empfangen (10) mindestens eines Signals, das von der zu erfassenden Vorrichtung gesendet wird,
• Bestimmen (11) ausgehend von dem empfangenen Signal mindestens einer Näherungsanzeige zwischen der zu erfassenden Vorrichtung und der Erfassungsvorrichtung,
• Erzeugen (12) mindestens eines Vibrationssignals, das für die bestimmte Näherungsanzeige repräsentativ ist,
• Senden (13) des erzeugten Vibrationssignals.

2. Verfahren zum Näherungsanzeigen nach Anspruch 1, derart, dass das empfangene Signal einem Funksignal entspricht, wobei der Schritt des Bestimmens einer Näherungsanzeige einen Schritt des Berechnens eines Abstands zwischen den Vorrichtungen unter Berücksichtigung eines Messwertes eines Merkmals des empfangenen Funksignals und mindestens einer Übereinstimmungsinformation zwischen einem Wert des Merkmals des Signals und einem Abstand aufweist.

3. Verfahren zum Näherungsanzeigen nach Anspruch 2, derart, dass das Funksignal einem Signal des Typs eines Bluetoothsignals mit niedriger Energie entspricht und dadurch, dass das gemessene Merkmal dem Pegel des empfangenen Signals entspricht.

4. Verfahren zum Näherungsanzeigen nach Anspruch 1, derart, dass der Schritt des Erzeugens des Vibrationssignals einen Schritt des Parametrierens mindestens eines Merkmals des erzeugten Vibrationssignals in Abhängigkeit von der bestimmten Näherungsanzeige aufweist.

5. Verfahren zum Näherungsanzeigen nach Anspruch 1, derart, dass die Anzahl der Wiederholungen der Schritte des Empfangens, Bestimmens, Erzeugens und Sendens von mindestens einem vorbestimmten Kriterium abhängt, das für die Näherungsanzeige repräsentativ ist, die in der vorhergehenden Wiederholung bestimmt wird.

6. EC-Kartenhülle, umfassend eine erste Kommunikationsvorrichtung, die Erfassungsvorrichtung genannt wird, und umfassend ein Näherungsanzeige-Modul zwischen der Erfassungsvorrichtung und einer zweiten Kommunikationsvorrichtung, die zu erfassende Vorrichtung genannt wird, wobei das Näherungsanzeige-Modul die folgenden Mittel aufweist:
• Mittel zum Empfangen (40) mindestens eines Signals, das von der zu erfassenden Vorrichtung gesendet wird,
• Mittel zum Bestimmen (41) ausgehend von dem empfangenen Signal mindestens einer Näherungsanzeige zwischen der zu erfassenden Vorrichtung und der Erfassungsvorrichtung,
• Mittel zum Erzeugen (42) mindestens eines Vibrationssignals, das für die bestimmte Näherungsanzeige repräsentativ ist,
• Mittel zum Senden (43) des erzeugten Vibrationssignals.

7. Computerprogramm, das von einem Kommunikationsnetz herunterladbar ist und/oder auf einem computerlesbaren Medium gespeichert und/oder von einem Mikroprozessor ausführbar ist, für das Umsetzen eines Verfahrens nach einem der Ansprüche 1 bis 5, wenn dieses Programm von einem Prozessor ausgeführt wird.

8. Computerlesbares Aufzeichnungsmedium, auf dem ein Computerprogramm aufgezeichnet ist, das einen Satz von Anweisungen aufweist, die von einem Computer oder einem Prozessor umgesetzt werden können, um ein Verfahren nach einem der Ansprüche 1 bis 5 umzusetzen, wenn dieses Programm von einem Prozessor ausgeführt wird.

## Claims

1. Method for indicating proximity implemented in a proximity indicating module attached to a first communications device, called a detector device, between said detector device and a second communications device called a device to be detected, said detector device being comprised in an electronic card case and said method comprising at least one iteration of the following steps:
• receiving (10) at least one signal sent out by said device to be detected;
• determining (11), from said received signal, at least one indication of proximity between said device to be detected and said detector device;
• generating (12) at least one vibratory signal representing said determined indication of proximity;
• sending (13) said generated vibratory signal.

2. Method for indicating proximity according to claim 1, wherein,
said received signal corresponding to a radio signal, said step for determining an indication of proximity comprises a step for computing a distance between said devices, taking account of a measurement of a characteristic of said received radio signal and at least one piece of information on correspondence between a value of said characteristic of said signal and a distance.

3. Method for indicating proximity according to claim 2, wherein said radio signal corresponds to a Bluetooth low-energy type signal and the measured characteristic corresponds to the level of the signal received.

4. Method for indicating proximity according to claim 1, wherein said step for generating said vibratory signal comprises a step for parameterizing at least one characteristic of said vibratory signal generated as a function of said determined indication of proximity.

5. Method for indicating proximity according to claim 1, wherein the number of iterations of the steps for receiving, determining, generating and sending depends on at least one predetermined criterion representing said indication of proximity determined at the previous iteration.

6. Electronic card case comprising a first communications device, called a detector device, and comprising a proximity indication module, between the detector device and a second communications device, called a device to be detected, said proximity indication module comprising the following means:
• means (40) for receiving at least one signal sent by said device to be detected;
• means (41) for determining, from said received signal, at least one indication of proximity between said device to be detected and said detector device;
• means (42) for generating at least one vibratory signal representing said determined indication of proximity;
• means (43) for sending out said generated vibratory signal.

7. Computer program downloadable from a communications network and/or stored on a computer-readable medium and/or executable by a microprocessor for the implementation of a method according to any of the claims 1 to 5, when this program is executed by a processor.

8. Computer-readable recording medium on which there is recorded a computer program comprising a set of instructions executable by a computer or a processor to implement the method according to any of the claims 1 to 5 when this program is executed by a processorr.
